# EUROPEAN PATENT APPLICATION

(11) **EP 3 349 194 A1**
(43) Date of publication of application: **18.07.2018**
(21) Application number: 16843713.5
(22) Date of filing: 05.08.2016
(51) Int. Cl.: G07F 1/00, G08B 1/08

(54) **SMART DEVICE FOR IDENTIFYING GARMENTS AND/OR FEATURES THEREOF, AND IDENTIFICATION METHOD**

(30) Priority: 10.09.2015 ES 201531296
(71) Applicant: Nayco Management, S.L., 08022 Barcelona (ES)
(72) Inventor: COSTA BOTEY, José Maria, 08022 Barcelona (ES)
(74) Representative: Espiell Volart, Eduardo Maria
(86) International application number: PCT/ES2016/070595
(87) International publication number: WO 2017/042408

(57) **Abstract**

SMART DEVICE FOR IDENTIFYING GARMENTS AND/OR FEATURES THEREOF, AND IDENTIFICATION METHOD that, particularly applicable to garments and/or clothing accessories of any kind and material, for men or women, or for any other article, including clothes, handbags, gloves, caps, shoes or other fashion products or accessories, of textile and no textile, is comprised, at least, of one tag (2) with electronic technology to incorporate information that can be proximity read by an electronic device (4), Smartphone, tablet or the like, comprised of a reader (5) adapted to reading the said information of the said tag (2) and a software such as an APP capable to reproduce, at least, sonically, the information on the garment (3) or characteristics contained in the tag (2).

## Description

### OBJECT OF THE INVENTION

The invention, as stated in the presentation of this specification, refers to a smart equipment for the identification of garments and/or their characteristics, and to the proceeding for the said identification, which provides some advantages, that will be described in details thereafter, which mean a novelty in the current state of the art.

The object of this invention is focused, concretely, in a smart equipment for identification, applicable namely to garments and/or clothing accessories for street clothes, sportswear or of any kind even shoes or another fashion accessory that, including, at least, a tag incorporated to the garment, adapted to be proximity read by means of an electronic device adapted to proximity reading tags, allows reading and/or sound reproducing the information contained in the tag and thereby the identification sought of the garment or any characteristic thereof or another additional information through the said device without seeing it is required, which results specially suitable, for example, for visually impaired people.

### FIELD OF APPLICATION OF THE INVENTION

The field of application of this invention is within the scope of the industry sector engaged in producing tagging, namely for garments and clothing accessories.

### BACKGROUND OF THE INVENTION

As it is known, blind people cannot know the characteristics of the articles until they perceive them by touch, but many of their features exist, mostly visual ones, for example colour, printed pattern, brightness, etc. that cannot be detected, unless the said information is provided to them some way.

This increases the difficulties that blind people already have, the objective of the present invention being to try to prevent the said problems, at least within the scope of clothing, because, because as it is known, the choice of colours, printed patterns and other characteristics of the garments and clothing accessories are very important towards self satisfaction and, namely, towards the image that everyone wants to project to the others.

To overcome these problems, the utility model U201530553 of the same applicant is already known, in which a garment adapted for sight impaired people is disclosed comprising, at least, a part with embossed information content on it, the said content being, preferably, a text in Braille writing including descriptive information on visible features and characteristics of the full garment or of some part thereof undetectable by touch.

This solution, however, although it satisfactorily reaches the objective to facilitate the identification and knowledge of the characteristics sought of the garment, has some limitations and aspects that can be improved, for example, as the amount of information that the part can include will have an influence in proportion to its size and this can uglify or modify the look of the garment or, even, be a nuisance or a bother or its incorporation being impossible in delicate or small-sized garments or accessories.

Therefore, the objective of this invention is to develop an improved system to provide the information sought on the garments or any fashion accessory, of any kind and material, for men or women, for the street or for any specific activity, including underwear, outwear, handbags, gloves, caps or other products of textile and no textile fashion, without that means including large parts or tags affixed to them, but simply including a small element that, taking profit of the current development of the technology allows their identification by any user without seeing the garment is required, including therefore the sight impaired people, by means of an electronic device, such as a Smartphone, a tablet, a Smartwatch and the like.

On the other hand, and with reference to the current state of art, it can be pointed out that, at least the applicant is not aware of the existence of any other smart equipment for the identification of garments and/or their characteristics or proceeding for the said identification having technical and constitutive characteristics similar to those of the equipment claimed herein.

### EXPLANATION OF THE INVENTION

The smart equipment for the identification of garments and/or their characteristics and the proceeding for the said identification, proposed by the invention, are therefore configured as a novelty within its field of application, because with its implementation the above mentioned objectives are satisfactorily reached, the technical details distinguishing them being duly disclosed in the final claims attached to this specification.

As above stated, what the invention proposes is a smart equipment that, applicable namely to garments and/or clothing accessories of any kind, even shoes or any other accessory, is comprised of at least one tag incorporated to the garment or accessory provided with electronic technology making it adapted to incorporate information and being proximity read by means of an electronic device, type Smartphone, tablet or the like, adapted for proximity reading the said information of the said tag and, in addition, incorporating a software capable to display the said information in a screen as well as sound reproducing its content, the said software consisting of, for example, an APP.

In addition the software will be capable to check the climatology of the place where the user is located (for example the external temperature or rain forecast) thanks to the geolocation of the electronic device and to inform the user on the suitability of the identified garment to the climatology of the place.

Optionally, the tag can also provide information on the wash and preservation instructions of the garment or accessory, as well as its origin, for example to certify its authenticity or ethical origin and its fulfilment of every applicable rule, evidencing its social compliance as well as any other relevant information and which could provide an added value to the garment.

Thus, the equipment allows reading and/or sound reproducing the information contained in the tag and therefore the identification of the garment or any characteristic thereof, depending on what was wished to be included as information, through the said equipment without actually seeing the garment is required, which results especially suitable for sight impaired people.

It should be pointed out that the tag technology may be varied, and it is envisaged that, at least one option of embodiment includes NFC technology (*Near Field Communication)* which, at it is known is a wireless communication technology, having short range and high frequency allowing to exchange data between devices and which standards meet the communication protocols and data exchange formats as it is based on RFID (*radio-frequency identification*). According to it, the reader incorporated to the electronic device energizes the tag and this later forwards the information it contains to the reader.

The tag, preferably, is affixed to the clothes in an easily reachable area when the clothes are exposed for sale or kept or hanged in the closet so that it results easy to approach the device to it in order the reader acts.

On its hand, the proceeding for the identification of the garment and/or its characteristics by means of the said smart equipment is comprised of the following steps:
- The user, whether a sight impaired person or not, open the APP of his/her electronic device.
- He/she approaches the electronic device to the tag, achieving that the electronic element of the tag is triggered.
- The tag forwards the information it contains to the reader of the electronic device.
- The reader of the electronic device receives the information and interprets it through the APP that "reproduces", at least sonically, the information it contains, although preferably, it is also displayed through the screen of the electronic device.

Optionally the proceeding for the identification of the garment and/or its characteristics is in addition comprised of the following steps.
- The software of the electronic device automatically obtains the climatology of the place where the user is located, thanks to the information obtained by geolocation.
- The software of the electronic device checks the suitability of the identified garment to the climatology of the place.
- The software of the electronic device informs the user on the suitability or not of the garment to the climatology.

The smart equipment for the identification of garments and/or their characteristics disclosed, and the proceeding for the said identification, therefore offer up to now unknown characteristics for the object to which it is designed, reasons that, jointly with its practical utility, provide them with a ground sufficient to apply for the privilege of exclusivity.

### DESCRIPTION OF THE DRAWINGS

To complement the description that is been made and in order to assist to best understanding the invention, a drawing is attached to this specification as an integral part thereof, a drawing in which for illustration and no limitation purpose, the following has been represented:
Figure number 1 and unique.- It shows a schematic representation of the smart equipment for the identification of garments and/or their characteristics, showing several garments with the tag containing information on each of them and the electronic device allowing to have access to the said information.

### PREFERRED EMBODIMENT OF THE INVENTION

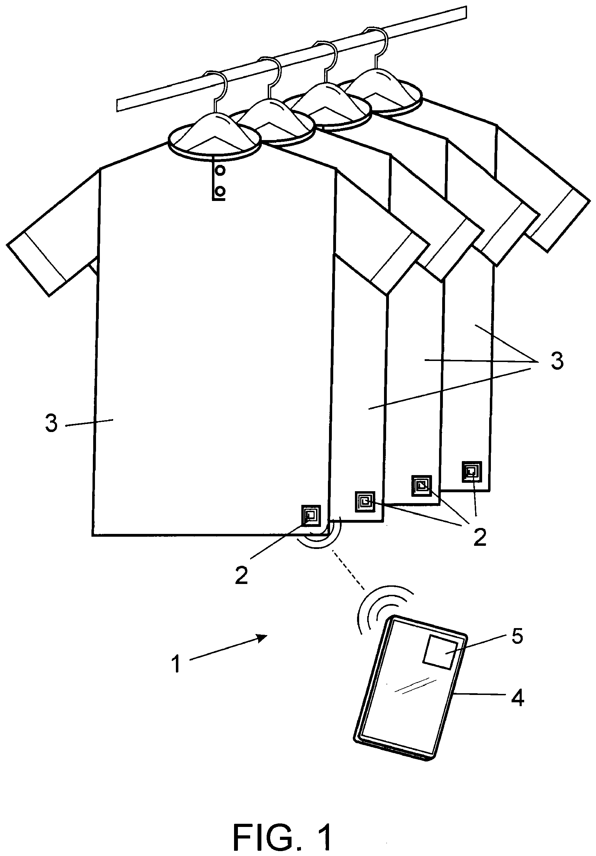

Looking at the said figure 1 and unique, and in accordance with the numbering adopted in it, a non limitative example of the smart equipment for the identification of garments and/or the characteristics of the invention can be seen, which is comprised of the parts and elements indicated and described in detail thereafter.

Thus, according to the said figure, it can be seen how the equipment (1) in question is comprised of ,
- at least, one tag (2) located on the garment (3) that presents the electronic technology allowing to incorporate information on the said garment (3) which can be proximity read through a reader (5)
- an electronic device (4), type Smartphone, tablet or the like, comprised of a reader (5) adapted to proximity reading the said information of the said tag (2), and
- a software, for example type APP, capable to reproduce, at least sonically, the said information on the garment (3) or any of its characteristics contained in the said tag (2), although, preferably, it is also adapted to display the said information through its screen of the electronic device.

Preferably, the said reader (5) of the electronic device (4) and the software or APP it incorporates are adapted to reading and reproducing the content of information of different tags (2) located on different garments (3), so that, by approaching it to them, it allows to individually identify each garment or its characteristics.

Anyway and also preferably, the electronic technology of the tags (2) and of the reader (5) of the electronic device (4) is NFC technology of wireless communication, having short range and high frequency

The garment or garments (3) to which is designed the incorporation of the disclosed tag (2) is of any class and material, for men or women, for the street or for any specific activity, for example sport, including also underwear, outwear, handbags, gloves, caps or other fashion accessories or products of textile and no textile.

On the other hand, the information contained in the tag (2) can be of any kind on the different characteristics of the garment (3) as well as, optionally, also on the wash and preservation instructions of the garment, as well as its origin or any other relevant information and which could provide an added value to the garment.

In addition, the software preferably will be capable to check the climatology of the place where the user is located (for example the external temperature or rain forecast) thanks to the geolocation of the electronic device and to inform the user on the suitability of the identified garment to the climatology of the place.

The nature of this invention having been sufficiently described, as well as the way of implementing it, it is not deemed necessary to extend even more its explanation in order that any skilled man in the matter understands its extent and the advantages arising from it, letting being known that , within its essential nature, it can implemented with other embodiments different in details from that disclosed for example purpose and which shall also within the protection sought provided that its fundamental principle is not altered, changed or modified.

## Claims

1. Smart equipment for the identification of garments and/or their characteristics that, particularly applicable to garments and/or clothing accessories (3) of any kind and material, for men or women, for the street or for any specific activity, for example sport, including also underwear, outwear, handbags, gloves, caps, shoes or other fashion accessories or products, of textile and no textile, is **characterized in that** it is comprised of:
- at least, one tag (2) that can be proximity read through a reader (5), the tag (2) located on the garment or clothing accessory (3) that presents the electronic technology allowing to incorporate information on the said garment (3)
- an electronic device (4), type Smartphone, tablet or the like, comprising a reader (5) adapted for proximity reading the said information of the tag (2), and
- a software, for example type APP, capable of reproducing, at least sonically, the said information on the garment (3) or any of ifs characteristics contained in the tag (2).

2. Smart equipment for the identification of garments and/or their characteristics according to claim 1, **characterized in that** the software incorporating the electronic device (4) is also adapted to display the information of the tag (2) through its screen.

3. Smart equipment for the identification of garments and/or their characteristics according to claim 1, **characterized in that** the software incorporating the electronic device (4) is also capable to check the climatology of the place where the user is located (for example the external temperature or rain forecast) thanks to the geolocation of the electronic device and to inform the user on the suitability of the identified garment to the climatology of the place.

4. Smart equipment for the identification of garments and/or their characteristics according to any of the preceding claims, **characterized in that** the reader (5) of the electronic device (4) and the software or APP it incorporates are adapted to read and reproduce the content of the information of different tags (2) located on different garments (3).

5. Smart equipment for the identification of garments and/or their characteristics according to any of the preceding claims, **characterized in that** the electronic technology of the tags (2) and of the reader of the electronic device (4) is NFC technology of wireless communication, having short range and high frequency

6. Proceeding for the identification of a garment and/or its characteristics by means of a smart equipment as disclosed in any of the preceding claims, **characterized in that** it is comprised of the following steps:
- The user opens the APP of his/her electronic device (4).
- He/she approaches the electronic device (4) to the tag (2) incorporated to the garment (3), making that the electronic device (4) triggers the electronic element of the tag (2).
- The tag (2) forwards the information it contains to the reader of the electronic device (4).
- The reader receives the information and interprets it through the software or APP that "reproduces", at least sonically, the information contained in the tag (2) and, if applicable, it also displays it though the screen of the electronic device (4).

7. Proceeding for the identification of a garment and/or its characteristics by means of a smart equipment as disclosed in claim 6, **characterized in that** it is additionally comprised of the following steps:
- The software of the electronic device automatically obtains the climatology of the place where the user is located, thanks to the information obtained by geolocation.
- The software of the electronic device checks the suitability of the identified garment to the climatology of the place.
- The software of the electronic device informs the user on the suitability or not of the garment to the climatology.
